(19) Europäisches Patentamt

European Patent Office

Office européen des brevets

(11) **EP 1 702 676 A1**

(12) **EUROPEAN PATENT APPLICATION**

(43) Date of publication:
**20.09.2006 Bulletin 2006/38**

(51) Int Cl.:
***B01J 19/00*** *(2006.01)*

(21) Application number: **06005338.6**

(22) Date of filing: **15.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.03.2005 JP 2005073422**

(71) Applicant: **HITACHI, LTD.**
**Chiyoda-ku**
**Tokyo 100-8280 (JP)**

(72) Inventors:
• **Asano, Yukako**
**c/o Hitachi, Ltd.**
**Int.Prop.Office**
**Tokyo 100-8220 (JP)**

• **Togashi, Shigenori**
**c/o Hitachi, Ltd**
**Tokyo 100-8220 (JP)**
• **Oda, Masashi**
**c/o Hitachi, Ltd.**
**Tokyo 100-8220 (JP)**
• **Shiraishi, Tomofumi**
**c7o Hitachi, Ltd.**
**Tokyo 100-8220 (JP)**
• **Kawamura, Tsutomu**
**c/o Hitachi, Ltd.**
**Tokyo 100-8220 (JP)**

(74) Representative: **Strehl Schübel-Hopf & Partner**
**Maximilianstrasse 54**
**D-80504 München (DE)**

(54) **Device and method for manufacturing substances**

(57)    There is provided means for increasing the yield and selectivity of an objective substance in a consecutive reaction. A substance manufacturing equipment for reacting a substance A and a substance B that can perform a consecutive reaction to produce a product of a first stage reaction as an objective substance, includes a microchannel 103, a mixing portion 105 including a channel 101 for introducing a solution containing the substance A into the microchannel and a channel 102 for introducing a solution containing the substance B into the microchannel, and a temperature control equipment 106 for controlling a temperature of a reaction system in the microchannel. The temperature control equipment 106 controls the temperature of the reaction system in the microchannel 103 within a temperature range that is higher than the reaction temperature of a batch method and lower than the boiling point of the reaction system.

[FIG. 1]

EP 1 702 676 A1

**Description**

BACKGROUND OF THE INVENTION

Field of the Invention

The present invention relates to a substance manufacturing equipment and method for obtaining an objective substance at a high yield and a high selectivity in a consecutive reaction.

Background Art

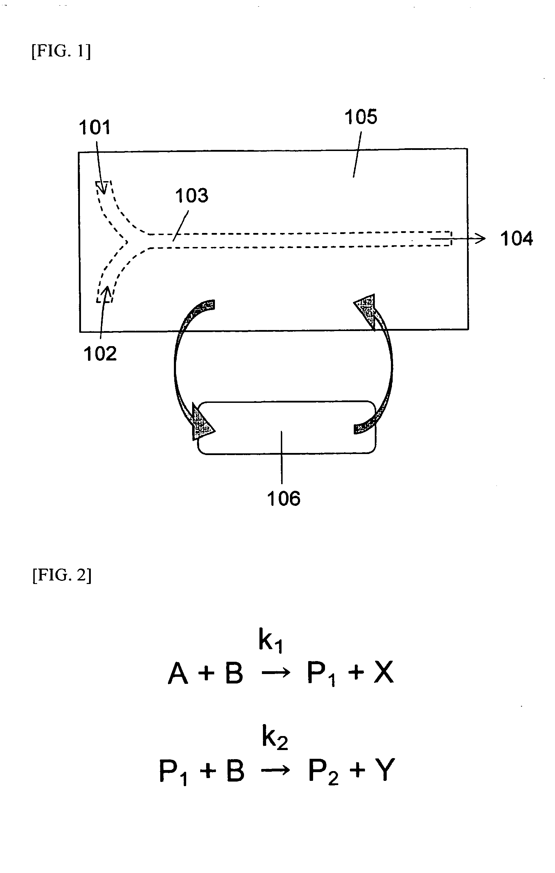

As an example of a consecutive reaction, a reaction between a substance A and a substance B as shown in FIG. 2 is known. Specifically, the substance A and the substance B react to produce an objective substance $P_1$ and a substance X, but when the substance B remains, the objective substance $P_1$ further reacts with the substance B to produce a by-product P2 and a substance Y. The by-product $P_2$ sometimes further reacts with the substance B to produce another by-product. The reaction between the substance A and the substance B does not always produce the substance X, and sometimes produces the objective substance $P_1$ only. Also, the reaction between the objective substance $P_1$ and the substance B does not always produce the substance Y, and sometimes produces the by-product $P_2$ only. Further, the substance X and the substance Y are the same substance in some cases and different substances in other cases.

When the objective substance $P_1$ is obtained in a larger amount than the by-product $P_2$, $k_1$ is larger than $k_2$ (i.e. $k_1 > k_2$) where $k_1$ is an apparent reaction rate constant of a first stage reaction and $k_2$ is an apparent reaction rate constant of a second stage reaction. At this time, the amount of the substance A and the amount of the substance B merely decrease and the amount of the by-product $P_2$ merely increases with the passage of time t, while the amount of the objective substance $P_1$ increases and then decreases, and takes its maximum value at a time $t_{max}$. Specifically, stopping the reaction at the time $t_{max}$ allows the largest amount of the objective substance $P_1$ to be obtained.

Thus, an example of a method for obtaining the objective substance $P_1$ in as large an amount as possible includes using an excessive amount of substance A to cause the substance B to be almost consumed at a step of production of the objective substance $P_1$ thereby restraining production of the by-product $P_2$. Another method includes reducing a reaction temperature to reduce a reaction rate and restrain production of the by-product $P_2$ in order to relatively increase the amount of the objective substance $P_1$ as much as possible at the time $t_{max}$ in a reaction on the condition that an equivalent of the substance B is equal to or smaller than an equivalent of the substance A.

When a chemical reaction occurs in a solution, it is known that the reaction includes two stages: a stage in which reactants diffuse and encounter each other, and a stage in which an activated complex (a transition state) is formed for a reaction. For an apparent reaction rate actually observed, a state where diffusion of substances is predominant is diffusion (mixing) rate control, and a state where a "true" reaction rate between the reactants is predominant is reaction rate control. The diffusion (mixing) of the substances can be quickly performed using a equipment for mixing a solution in a microchannel formed by micro processing technology or the like, a so-called microreactor. The microreactor is useful for a reaction system of diffusion rate control because of its high reaction rate. Thus, using the microreactor allows the substance A and the substance B to efficiently react in the consecutive reaction as in FIG. 2, and the objective substance $P_1$ can be obtained at a high yield and a high selectivity.

From the above, as to a substance manufacturing method using a microreactor for obtaining an objective substance at a high yield and a high selectivity, for example, JP Patent Publication (Kokai) No. 2004-99443A discloses a method for reacting an aromatic compound solution and an N-acyliminium ion solution that is an alkylating agent with a micromixer to selectively obtain an objective monoalkylated product at a high yield. JP Patent Publication (Kohyo) No. 2001-521816A discloses a method for using a microreactor to improve control of a fluid chemical reaction, and improve a yield and a selectivity of an objective substance particularly in a fluorination reaction.

However, even if the microreactor is used to try to achieve quick diffusion (mixing) of substances in order to obtain an objective substance $P_1$ in as large an amount as possible, a technique of reducing the size of a channel has a limitation, and a flow rate decreases and thus the amount of production decreases with decreasing size of the channel. Thus, actually, a reduction in diffusion time by a reduction in the size of the channel has a limitation.

On the other hand, when an equivalent of a substance A is equal to or larger than an equivalent of a substance B in use, it can be considered that a first stage reaction is accelerated to speed up an increase in the amount of an objective substance $P_1$ in order to relatively increase the amount of the objective substance $P_1$ as much as possible at a time $t_{max}$. In an experiment by a batch method, it is empirically known that for a general reaction, an increase in a reaction temperature by 10°C doubles or triples an apparent reaction rate. However, particularly for an exothermal reaction, the increase in the apparent reaction rate causes a partially hot portion called a hot spot by sudden heat resulting from the reaction, which may lead to bumping or a runaway reaction, and thus the reaction temperature cannot be increased. Further, in the hot spot, a second stage reaction is also accelerated, which may lead to an increase in another by-product, thereby reducing a yield and a selectivity of an objective substance.

SUMMARY OF THE INVENTION

An object of the present invention is to provide means for increasing a yield and a selectivity of an objective substance in a consecutive reaction.
The inventors have diligently studied to solve the above described problems and found that mixing starting substances in a microchannel and performing a reaction at a relatively high temperature allows an objective substance to be obtained at a high yield and a high selectivity in a first stage of a consecutive reaction, leading to the completion of the present invention.
Specifically, the present invention includes the following inventions.

(1) A substance manufacturing equipment for reacting a substance A and a substance B that can perform a consecutive reaction to produce a product of a first stage reaction as an objective substance, including:

a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is three times as the ratio at a melting point of the reaction system (for example, 0°C) and a boiling point of the reaction system.

(2) A substance manufacturing equipment for reacting a substance A and a substance B that can perform a consecutive reaction to produce a product of a first stage reaction as an objective substance, including:

a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is 10 and a boiling point of the reaction system.

(3) A substance manufacturing equipment for reacting a substance A and a substance B that can perform a consecutive reaction to produce a product of a first stage reaction as an objective substance, including:

a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature lower than a boiling point of the reaction system by 30°C and the boiling point of the reaction system.

(4) The manufacturing equipment according to any one of (1) to (3) for reacting the substance A and the substance B that can perform a reaction in a mechanism below to produce a substance $P_1$ as an objective substance:

$$A + B \xrightarrow{k_1} P_1 + X$$

$$P_1 + B \xrightarrow{k_2} P_2 + Y$$

wherein A and B are the starting substances, $P_1$ is the objective substance, X, Y and $P_2$ are by-products, X and Y may optionally be produced, $k_1$ is the apparent reaction rate constant of the first stage reaction, and $k_2$ is the apparent reaction rate constant of the second stage reaction.

(5) The manufacturing equipment according to (4), wherein an equivalent of the substance B introduced into the microchannel is equal to or smaller than an equivalent of the substance A introduced into the microchannel.

(6) The manufacturing equipment according to any one of (1) to (5), wherein a channel width of the microchannel is 1 mm or less.

(7) The manufacturing equipment according to any one of (1) to (6), wherein the temperature control equipment controls the temperature of the reaction system in the microchannel at a constant temperature from a start to a finish of the reaction between the substance A and the substance B.

(8) The manufacturing equipment according to any one of (1) to (7), wherein the reaction between the substance A and the substance B is a substitution reaction.

(9) The manufacturing equipment according to any one of (1) to (8), wherein the reaction between the substance A and the substance B is an exothermal reaction.

(10) A manufacturing equipment system including a manufacturing equipment according to any one of (1) to (9).

(11) A method for reacting a substance A and a substance B that can perform a consecutive reaction to produce a product of a first stage reaction as an objective substance, including the step of reacting the substance A and the substance B in a microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is three times as the ratio at a melting point of the reaction system (for example, 0°C) and a boiling point of the reaction system.

(12) A method for reacting a substance A and a substance B that can perform a consecutive reaction to produce a product of a first stage reaction as an objective substance, including the step of reacting the substance A and the substance B in a microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is 10 and a boiling point of the reaction system.

(13) A method for reacting a substance A and a substance B that can perform a consecutive reaction to produce a product of a first stage reaction as an objective substance, including the step of reacting the substance A and the substance B in a microchannel within a temperature range between a temperature lower than a boiling point of a reaction system by 30°C and a boiling point of the reaction system.

(14) The method according to any one of (11) to (13) for reacting the substance A and the substance B in a mechanism below to produce a substance $P_1$ as an objective substance:

$$A + B \xrightarrow{k_1} P_1 + X$$

$$P_1 + B \xrightarrow{k_2} P_2 + Y$$

wherein A and B are the starting substances, $P_1$ is the objective substance, X, Y and $P_2$ are by-products, X and Y may optionally be produced, $k_1$ is the apparent reaction rate constant of the first stage reaction, and $k_2$ is the apparent reaction rate constant of the second stage reaction.

(15) The method according to (14), wherein the reaction is performed on the condition that an equivalent of the substance B is equal to or smaller than an equivalent of the substance A.

(16) The method according to any one of (11) to (15), wherein a channel width of the microchannel is 1 mm or less.

(17) The method according to any one of (11) to (16), wherein the substance A and the substance B are reacted at a constant temperature from a start to a finish of the reaction.

(18) The method according to any one of (11) to (17), wherein the reaction between the substance A and the substance B is a substitution reaction.

(19) The method according to any one of (11) to (18), wherein the reaction between the substance A and the substance B is an exothermal reaction.

The present invention allows the objective substance obtained in the first stage reaction between the substance A and the substance B to be obtained at a high yield and a high selectivity in the consecutive reaction.

This description includes part or all of the contents as disclosed in the description and /or drawing of Japanese Patent Application No. 2005-073422, which is a priority document of the present application.

BRIEF DESCRIPTION OF THE DRAWINGS

FIG. 1 is a conceptual view of a substance manufacturing equipment according to the present invention;
FIG. 2 shows a chemical equation of a consecutive reaction between a substance A and a substance B;
FIG. 3 is a conceptual view showing temperature dependences of an apparent reaction rate constant $k_1$ of a first stage reaction and an apparent reaction rate constant $k_2$ of a second stage reaction in a reaction by a batch method;
FIG. 4 is a conceptual view showing temperature dependences of an apparent reaction rate constant $k_1$ of a first stage reaction and an apparent reaction rate constant $k_2$ of a second stage reaction in a reaction according to the present invention;
FIG. 5 is a conceptual view showing a reaction when a B solution is dropped into an A solution in the reaction by the batch method;
FIG. 5(A) is a conceptual view showing a state when the B solution is dropped into the A solution;
FIG. 5(B) is a conceptual view showing a state when the B solution is divided into clusters in the A solution by stirring;
FIG. 5(C) is a conceptual view showing a reaction between the substance A and the substance B at an interface.
FIG. 6 is a conceptual view showing a reaction when the A solution and the B solution are mixed in a microchannel;
FIG. 6(A) is a conceptual view showing a state where the substance A and the substance B diffuse each other;
FIG. 6(B) is a conceptual view showing the consecutive reaction between the substance A and the substance B;
FIG. 7 is a conceptual view showing a reaction when the A solution and the B solution are mixed in the microchannel;
FIG. 7(A) is a conceptual view showing a state when diffusion of the substances is insufficient at a low temperature;
FIG. 7(B) is a conceptual view showing a state when the diffusion of the substances is sufficient at a high temperature;
FIG. 8 is a conceptual view of an embodiment of a substance manufacturing system according to the present invention; and
FIG. 9 is a schematic diagram of an embodiment of the substance manufacturing equipment according to the present invention.

Description of the numbers in the drawings:

101: a A solution, 102: a B solution, 103: a microchannel, 104: a solution containing an objective substance, 105: a mixing portion, 106: a temperature control equipment, 501: a droplet of a B solution, 502: a cluster of a B solution, 503: a layer of an objective. substance $P_1$, 504: a layer of a by-product $P_2$, 601: a mixing start portion, 602: a substance A 603: a substance B, 604: an objective substance $P_1$, 605: a by-product $P_2$, 701: a "true" reaction time, 702: a diffusion time, 801: a C solution, 802: solutions as a product solution in a reaction between a substance C and a substance $P_1$, 803: a mixing portion, 804: a final objective substance, 805: a substance purifying equipment, 901: a syringe, 902: a pump, 903: a tube, 904: a thermostatic bath, 905: a container, 906: a tube.

DETAILED DESCRIPTION OF THE PREFERRED EMBODIMENTS

Now, the present invention will be described with reference to FIGS. 1 to 8.
In the present invention, a consecutive reaction is also referred to as a continuous reaction, and has a meaning generally used in the art. Specifically, the consecutive reaction means a reaction wherein a product of a chemical reaction is subject to another reaction and changed to another product. FIG. 2 shows a chemical reaction formula of an embodiment of a consecutive reaction with a substance A and a substance B as starting substances. In the consecutive reaction between the substance A and the substance B in FIG. 2, the substance A and the substance B react with each other to produce an objective substance $P_1$ and a substance X. When the substance B remains, the objective substance $P_1$ further reacts with the substance B to produce a by-product $P_2$ and a substance Y The by-product $P_2$ sometimes further reacts with the substance B to produce another by-product. The reaction between the substance A and the substance B does not always produce the substance X, and sometimes produces the objective substance $P_1$ only. Also, the reaction between the objective substance $P_1$ and the substance B does not always produce the substance Y, and sometimes produces the product $P_2$ only. Further, the substance X and the substance Y are the same substance in some cases and different substances in other cases. Herein, $k_1$ is an apparent reaction rate constant of a first stage reaction and $k_2$ is an apparent reaction rate constant of a second stage reaction.
Reactions to which the present invention can be applied are not limited as long as the reactions are consecutive reactions, and include, for example, a substitution reaction such as a halogenation reaction, a nitration reaction, a sulfonation reaction, and an alkylation reaction, as well as a polymerization reaction, and an addition reaction.
The present invention is particularly suitable for a substitution reaction, particularly a halogenation reaction of an aromatic compound. For example, an aromatic compound as a substance A and a halogenating agent as a substance B are reacted to obtain a monohalogenated aromatic compound as an objective substance $P_1$. In this reaction, the objective substance $P_1$ can further reacts with the halogenating agent B to produce a dihalogenated aromatic compound as a by-product $P_2$.

FIG. 1 is a conceptual view of an embodiment of a substance manufacturing equipment and method according to the present invention. The substance manufacturing equipment in FIG 1 includes a mixing portion 105 that includes a channel for introducing an A solution 101 containing the substance A, a channel for introducing a B solution 102 containing the substance B, and a microchannel 103 for mixing and reacting them, and a temperature control equipment 106. Then, a solution 104 containing an objective substance obtained by the reaction between the substance A and the substance B is discharged from the mixing portion.

In order to develop the consecutive reaction in FIG. 2, the A solution 101 containing the substance A and the B solution 102 containing the substance B are continuously supplied to the mixing portion 105 of the substance manufacturing equipment in FIG. 1 in an amount such that an equivalent of the substance A and an equivalent of the substance B are equal or the substance A is excessive.

The microchannel is not limited as long as it is a fine channel through which a reaction solution can flow, and may include one channel, a plurality of channels, or one channel partitioned into micro channels.

In FIG. 1, the channel of the mixing portion including the channel for introducing the A solution 101 containing the substance A, the channel for introducing the B solution 102 containing the substance B, and the microchannel 103 has a Y-shaped structure, but not limited to the Y-shaped structure, and may have a T-shaped structure or the like as long as the A solution 101 and the B solution 102 are mixed in the microchannel 103. In the mixing portion 105, the A solution and the B solution may be interchanged and mixed.

The channel may have a structure including nozzles for discharging the B solution arranged in a wall surface of the channel through which the A solution flows, or a structure including nozzles for discharging the B solution arranged in a bottom surface of the channel through which the A solution flows. The microchannel in which the A solution 101 and the B solution 102 join has a linear structure in FIG. 1, but not limited to the linear structure, and may have a meander structure or a spiral structure in consideration of a residence time.

A channel width of the microchannel is smaller than a diameter of an cluster obtained by stirring in a reaction by a batch method, generally less than 1 mm, preferably less than 500 $\mu$m, and more preferably 1 to 250 $\mu$m, and can be changed according to the type of a reaction or the intended use. For the channel width, all the lengths of a channel sections need not to be within the range, but a certain length may be within the range. In theory, it is known that mixing efficiency increases with decreasing channel width, but a flow rate decreases with decreasing channel width to reduce a production amount of the objective substance, which is not practical. Also, contamination by impurity or crystallization by a reaction increases the risk of a blockage of a channel, and thus the width of the microchannel is preferably set according to the type of a reaction or the intended use. The channel widths of the channel for introducing the solution containing the substance A and the channel for introducing the solution containing the substance B may be set in a similar manner, but are not particularly limited.

The length of the microchannel may be set according to the type of a reaction by those skilled in the art, and is generally 1 to 1000 mm, preferably 1 to 750 mm, and more preferably 1 to 500 mm. A sufficient residence time needs not to be ensured by the microchannel only, and a mechanism for ensuring the residence time may be provided downstream of the microchannel 103.

The flow rate of the reaction solution in the microchannel is not particularly limited, but is generally 1 to 1000 ml/min, preferably 2 to 500 ml/min, and more preferably 3 to 100 ml/min.

Further, the mixing portion 105 in FIG. 1 shows the channel in which two kinds of solutions, the A solution 101 and the B solution 102 are mixed, but it is not limited to the channel in which the two kinds of solutions are mixed, and may include a channel in which three or more kinds of solutions are mixed or a multilayered channel of these solutions. In addition to the mechanism for introducing the A solution 101 and the B solution 102, mixing the solutions in the microchannel 103, and discharging the solutions as the solution 104 containing the objective substance, the mixing portion 105 may include, upstream or downstream of the mechanism, for example, a mechanism for introducing and mixing a plurality of solutions and discharging the solutions as the A solution 101 and the B solution 102, a mechanism for introducing and mixing the solution 104 containing the objective substance and one or more solutions, causing a further reaction, and discharging a product solution of the reaction, or a mechanism for purifying the product by extraction or distillation.

As the mixing portion, a commercially available microreactor may be used such as a microreactor commercially available from Institut fur Mikrotechnik Mainz GmbH.

The material of the mixing portion that includes the channels is not limited as long as it does not affect the reaction, and may be changed according to the type of the reaction. For example, stainless, silicon, gold, glass, hastelloy or silicone resin may be used, or glass lining, metal having a surface coated with nickel, gold or silver, or silicon having an oxidized surface, which have increased corrosion resistance, may be used.

The temperature control equipment is not limited, and a equipment generally used in the art can be used. The temperature control equipment generally includes at least one heater, at least one cooler, a temperature measuring equipment, and a temperature adjusting equipment connected to the heater, the cooler, and the temperature measuring equipment. For example, a thermostatic bath that receives the entire mixing portion may be used, the microchannel may be held between plates whose temperature is controlled by peltier elements or a fluid, or a further channel may be provided in the mixing portion to control the temperature by flowing a fluid at a predetermined temperature.

The inventors have found that in the reaction between the substance A and the substance B that can perform a consecutive reaction, the equipment and the method according to the present invention are used to mix the substance A and the substance B in the microchannel, and cause a reaction at a temperature higher than a general reaction temperature $T_{batch}$ in a batch method, particularly a temperature close to a boiling point $T_b$ of a reaction system that is an upper limit of a reaction temperature, thereby increasing a yield and a selectivity of the objective substance in the first stage reaction.

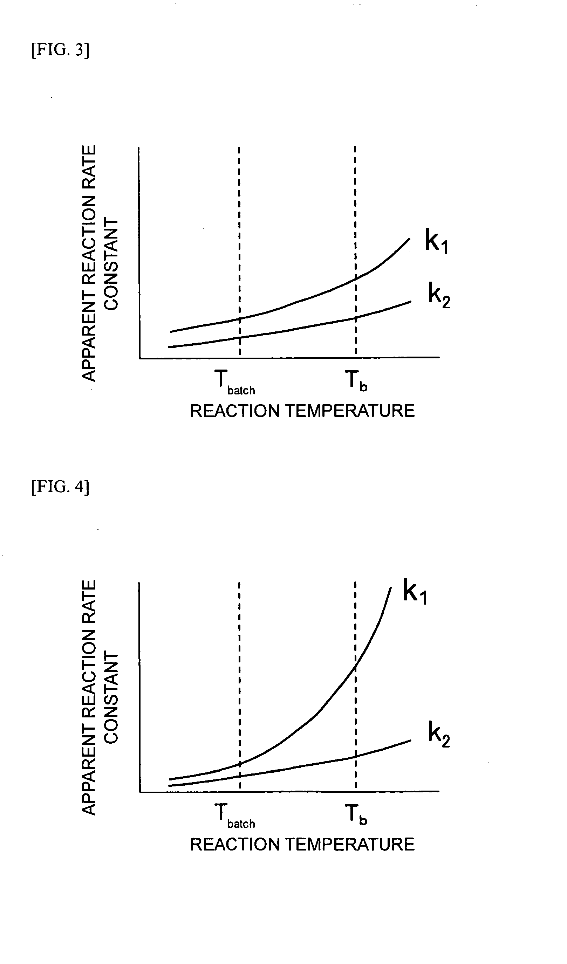

FIG. **3** is a conceptual view showing temperature dependences of an apparent reaction rate constant $k_1$ of a first stage reaction and an apparent reaction rate constant $k_2$ of a second stage reaction when the reaction between the substance A and the substance B as shown in FIG. 2 is developed in a reaction by the batch method on the condition that an equivalent of the substance A is equal to an equivalent of the substance B or the substance A is excessive. As shown in FIG. 3, for the relationship between $k_1$ and $k_2$, both $k_1$ and $k_2$ increase at a high temperature, but the ratio $k_1/k_2$ between $k_1$ and $k_2$ hardly changes relative to the temperature. Thus, even if the reaction is performed at the temperature closer to the boiling point $T_b$ of the reaction system that is the upper limit of the reaction temperature for accelerating the first stage reaction to speed up an increase in the amount of an objective substance $P_1$, the second stage reaction is also accelerated to also speed up an increase in the amount of a by-product $P_2$. Thus, the yield and the selectivity of the objective substance $P_1$ cannot be remarkably increased as compared with at the general reaction temperature $T_{batch}$ in the reaction by the batch method.

On the other hand, FIG. 4 is a conceptual view showing temperature dependences of an apparent reaction rate constant $k_1$ of a first stage reaction and an apparent reaction rate constant $k_2$ of a second stage reaction in the reaction according to the present invention. As shown in FIG. 4, for the relationship between $k_1$ and $k_2$, both $k_1$ and $k_2$ increase at a high temperature, but an increasing rate of $k_1$ is larger and thus the ratio $k_1/k_2$ between $k_1$ and $k_2$ increases with increasing temperature. Thus, even if the reaction is performed at a temperature closer to the boiling point $T_b$ of the reaction system that is the upper limit of the reaction temperature for accelerating the first stage reaction to speed up an increase in the amount of an objective substance $P_1$, the second stage reaction is not relatively accelerated to relatively slow down an increase in the amount of a by-product $P_2$. Thus, the yield and the selectivity of the objective substance $P_1$ can be remarkably increased as compared with at the general reaction temperature $T_{batch}$.

The reason that there is a difference in the temperature dependences of the apparent reaction rate constants between the reaction by the batch method and the reaction by the present invention as described above can be explained as a difference in a mixing mode of the substances in the reactions.

It is known that a change in reaction rate constant by temperature follows an Arrhenius equation in formula (1).

$$k = A \exp(-E_a/RT) \qquad (1)$$

wherein $E_a$ is activation energy, A is a frequency factor (a pre-exponential factor), R is a gas constant, and T is an absolute temperature, and $E_a$ and A are values inherent in a reaction condition. $E_a$ corresponds to energy required for a reaction between reactants, and is considered to have an extremely low temperature dependence. On the other hand, A corresponds to a probability of collision and reaction between the reactants, and is a function of convection C that is a scale for a mixing state of the substances and diffusion coefficient D of the substances.

$$A = A(C,D) \qquad (2)$$

It is known that a temperature dependence of A is low and does not exceed fractional power of temperature in the general batch method, and a temperature dependence of the apparent reaction rate constant mainly depends on an exponential portion in the formula (1). It is because convection by stirring is more predominant than diffusion of substances indicating the temperature dependence in the mixing mode of the substances. Thus, A in the formula (2) mainly depends on the convection C, and the ratio $k_1/k_2$ between $k_1$ and $k_2$ hardly changes relative to the temperature. In the reaction according to the present invention, however, stirring is not performed and thus the diffusion of the substances is predominant in the mixing mode of the substances. Thus, A in the formula (2) mainly depends on the diffusion coefficient D of the substances, and A has a remarkable temperature dependence. Therefore, the diffusion of the substances occurs more vigorously in the reaction at a high temperature, the substance A and the substance B can efficiently react, and no substance B remains. Thus, the increasing rate of $k_1$ becomes larger than the increasing rate of $k_2$ to increase the ratio $k_1/k_2$ between $k_1$ and $k_2$.

For obtaining the objective substance that is the product of the first stage reaction at a high yield and a high selectivity, the temperature of the reaction system in the microchannel is controlled to be higher than the general reaction temperature by the batch method and lower than the boiling point $T_b$ of the reaction system. Particularly, controlling to a temperature closer to $T_b$ provides a higher yield and a higher selectivity. The temperature of the reaction system in the microchannel means a temperature of the reaction solution in the microchannel that may contain the substance A, the substance B, the objective substance, the by-product, and a solvent or the like, and the boiling point $T_b$ of the reaction system means a boiling point of the reaction solution in the microchannel that may contain the substance A, the substance B, the objective substance, the by-product, and a solvent or the like.

Specifically, the temperature of the reaction system in the microchannel is controlled within a temperature range between a temperature at which the ratio $k_1/k_2$ between the apparent reaction rate constants is three times, preferably three point five times, more preferably four times as the ratio at a melting point of the reaction system (for example, 0°C) and $T_b$. Alternatively, the temperature of the reaction system in the microchannel is controlled within a temperature range between a temperature at which the ratio $k_1/k_2$ between the apparent reaction rate constants is 10, preferably 20, and more preferably 25 and $T_b$. Alternatively, the temperature of the reaction system in the microchannel is controlled within a temperature range between a temperature lower than $T_b$ by 30°C, preferably by 25°C, and more preferably by 20°C and $T_b$. Particularly, controlling to a temperature closer to $T_b$ provides a higher yield and higher selectivity.

When the length of the microchannel in the mixing portion is insufficient, the reaction is not likely to be completed at a step of discharging the reaction solution. In such a case, a mechanism to ensure a residence time is preferably provided following the mixing portion. At all events, the temperature of the reaction system is preferably controlled at a constant temperature from a start to a finish of the reaction between the substance A and the substance B. Besides the microchannel in which the solution A containing the substance A and the solution B containing the substance B join for the reaction, the channels for introducing the solutions A and B and the entire mixing portion are preferably controlled at the same constant temperature as the microchannel.

Unlike the reaction by the batch method in which the ratio $k_1/k_2$ between the apparent reaction rate constants hardly changes in response to the temperature change, in the present invention, when the temperature of the reaction system in the microchannel is controlled within a temperature range not lower than a temperature at which the ratio $k_1/k_2$ between the apparent reaction rate constant $k_1$ of the first stage reaction between the substance A and the substance B and the apparent reaction rate constant $k_2$ of the second stage reaction is three times as the ratio at a melting point of the reaction system (for example, 0°C) and lower than the boiling point $T_b$ of the reaction system, $k_1/k_2$ at that temperature increases to relatively accelerate the first stage reaction. Thus, the objective substance can be obtained at a higher yield and a higher selectivity than the reaction by the batch method. When the temperature of the reaction system in the microchannel is controlled within a temperature range not lower than a temperature at which the ratio $k_1/k_2$ between the apparent reaction rate constant $k_1$ of first stage reaction between the substance A and the substance B and the apparent reaction rate constant $k_2$ of the second stage reaction is 10 and lower than $T_b$, $k_1/k_2$ at that temperature also increases to relatively accelerate the first stage reaction, and thus the objective substance can be obtained at a higher yield and a higher selectivity than the reaction by the batch method. Further, when the temperature of the reaction system in the microchannel is controlled within a temperature range between a temperature lower than the boiling point of the reaction system by 30°C and $T_b$, the temperature of the reaction system is considered to be also higher than the reaction temperature by the batch method, and $k_1/k_2$ at that temperature increases to relatively accelerate the first stage reaction, and thus the objective substance can be obtained at a higher yield and a higher selectivity than the reaction by the batch method.

The ratio $k_1/k_2$ between the apparent reaction rate constants at a specific reaction temperature can be calculated by setting a reaction rate equation that indicates a relationship between a production rate (a reaction rate) of the product and a concentration of the reactant, experimentally measuring the concentrations of the reactant and the product at each time, and applying the concentrations to the reaction rate equation. Also, $k_1/k_2$ may be calculated by experimentally measuring an initial rate, and applying the rate to the reaction rate equation. Further, $k_1/k_2$ may be calculated by analytically or numerically working out the reaction rate equation so as to reproduce a ratio between the reactant and the product finally obtained.

Now, a reason that there is the difference in the temperature dependences of the apparent reaction rate constants between the reaction by the batch method and the reaction by the present invention will be described in more detail taking as an example the embodiment of the equipment according to the present invention in FIG. 1 and the consecutive reaction in FIG. 2.

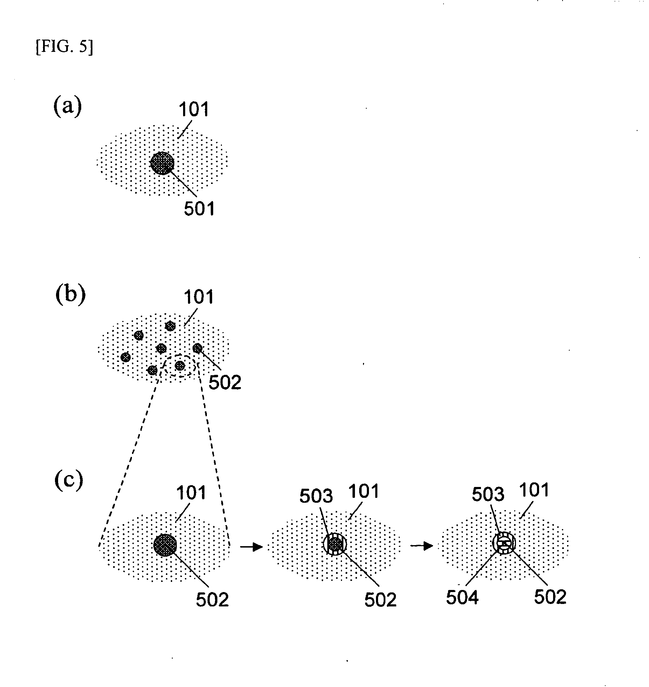

FIG. 5 is a conceptual view showing a reaction when the B solution is dropped into the A solution in the reaction by the batch method, FIG. 5(A) is a conceptual view showing a state when the B solution is dropped into the A solution, FIG. 5(B) is a conceptual view showing a state when the B solution is divided into clusters in the A solution by stirring, and FIG. 5(C) is a conceptual view showing a reaction between the substance A and the substance B at an interface. When the B solution is dropped in the A solution 101, as shown in FIG. 5(A), a droplet 501 of the B solution when dropped starts to be mixed by diffusion of the substances and also mixed by eddy diffusion by stirring as shown in FIG. 5(B). However, a diameter of the cluster obtained by stirring is on the order of some 100 $\mu$m at minimum (Hideho Okamoto et al., Sumitomo Chemical, 2001-II, pp. 32-45 (2001)), and the value of the diffusion coefficient D is on the order of $10^{-9}$ to $10^{-10}$ $m^2$/s, and thus complete diffusion and mixing of the substances takes time on the order of a second by Fick's second law. Specifically, the mixing mode of the substances in the reaction by the batch method is controlled mainly by the convection developed by the stirring. Thus, the diffusion of the substances do not cause a plurality of clusters 502 of the B solution to be instantaneously completely diffused and mixed, and an cluster state of the B solution is substantially maintained.

Thus, the diffusion rate of the substances is low, and as shown in FIG. 5(C), the substance B reacts with the substance A substantially at the interface of the cluster 502 of the B solution, and a layer 503 of the objective substance $P_1$ is formed so as to surround a finer cluster 502 of the B solution. An unreacted substance B remains after the production of the objective substance $P_1$, and thus the substance B further reacts with the objective substance $P_1$ substantially at the interface of the cluster 502 of the B solution, and a layer 504 of the by-product $P_2$ is formed so as to surround the cluster 502 of the B solution.

As to the state of the reaction when the reaction temperature is increased, it is known that the diffusion coefficient D is proportional to T/$\mu$ where T is the absolute temperature (K) and $\mu$ is the viscosity of the solvent, and $\mu$ decreases by 5% to 10% when the temperature of the solvent is increased by one degree. Thus, when the reaction temperature is increased, the value of D increases to facilitate the diffusion of the substances, but even if the reaction temperature is increased by 10°C, D increases by two or three times only. Thus, complete diffusion and mixing of the substances takes time on the order of at least a second, and the mixing of the substances in the reaction by the batch method is still developed mainly by the convection by the stirring, and there is no significant change in the reaction. Thus, even if the reaction temperature is increased, there is no remarkable change in the ratio $k_1/k_2$ between the apparent reaction rate constants.

The reaction when the B solution is dropped into the A solution has been described, but when the A solution and the B solution are simultaneously placed into a container and stirred, clusters of the A solution and the B solution are also produced by stirring, and thus the same reaction occurs as when the B solution is dropped into the A solution.

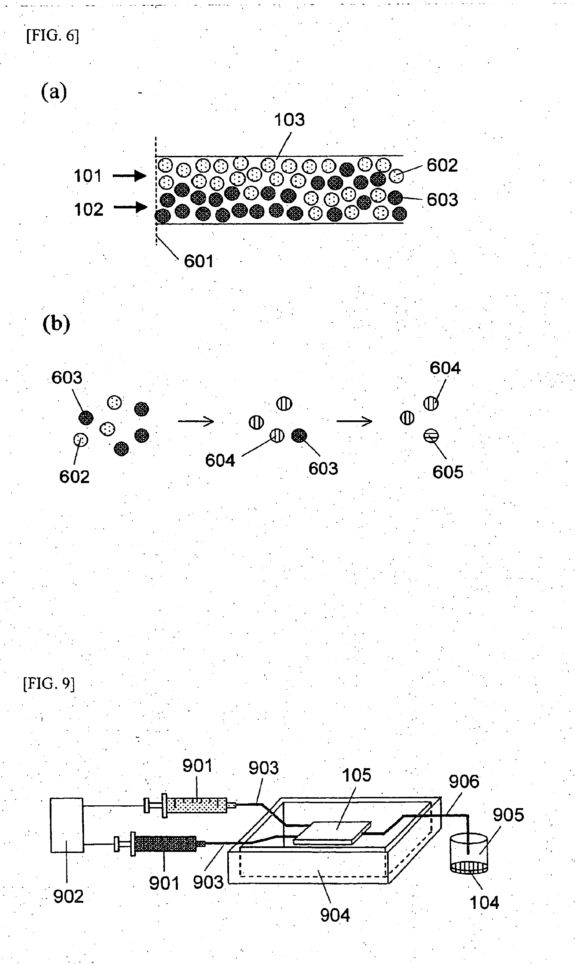

On the other hand, FIG. 6 is a conceptual view showing a reaction when the A solution and the B solution are mixed in the microchannel, FIG. 6(A) is a conceptual view showing a state where the substance A and the substance B diffuse each other, and FIG. 6(B) is a conceptual view showing the consecutive reaction between the substance A and the substance B. As shown in FIG. 6(A), the A solution 101 and the B solution 102 join at a mixing start portion 601 at a left end of the microchannel 103 and flow to the right, a substance A 602 diffuses into the B solution 102, and a substance B 603 diffuses into the A solution 101, and as shown in FIG. 6(B), the substance A 602 and the substance B 603 react with each other to produce an objective substance $P_1$ 604. When an unreacted substance B remains at a step of production of the objective substance $P_1$ 604, the objective substance $P_1$ 604 further reacts with the substance B 603 to produce a by-product $P_2$ 605.

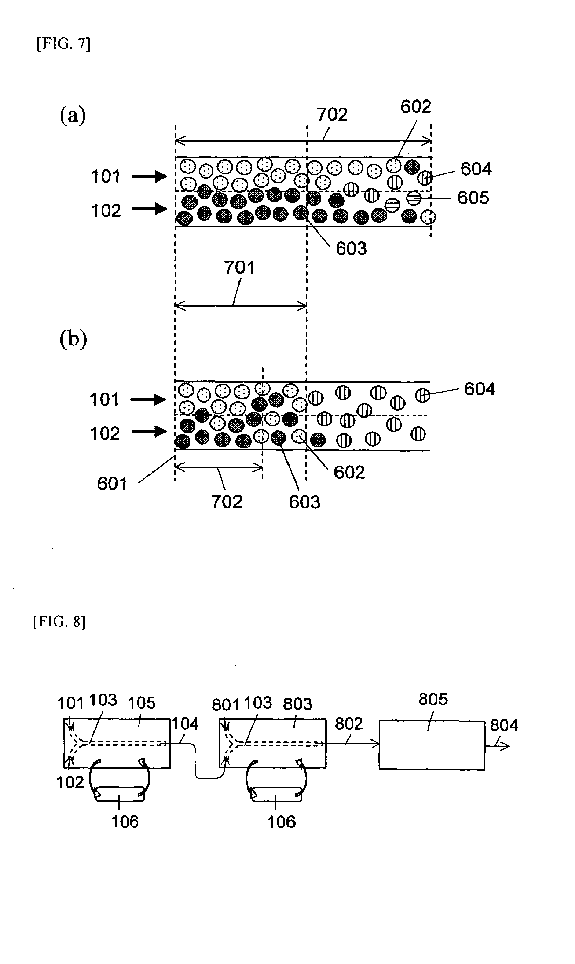

FIG. 7 is a conceptual view showing a reaction when the A solution and the B solution are mixed in the microchannel, FIG. 7(A) is a conceptual view showing a state when diffusion of the substances is insufficient at a low temperature, and FIG. 7(B) is a conceptual view showing a state when the diffusion of the substances is sufficient at a high temperature. In FIG. 7, as in FIG. 6(A), the A solution 101 and the B solution 102 join at the mixing start portion 601 at the left end of the microchannel 103 and flow to the right. As shown in FIG. 7(A), when the diffusion of the substances is insufficient at the low temperature, that is, when a diffusion time 702 is longer than a "true" reaction time 701, there coexist both a portion where the A solution 101 and the B solution 102 are maintained in layers, and a portion where complete mixing of the substance A 602 and the substance B 603 occurs during the "true" reaction time 701 between the substance A and the substance B. At the portion where the complete mixing of the substance A 602 and the substance B 603 occurs, the substance A 602 and the substance B 603 can efficiently react with each other, and no substance B remains, and thus the objective substance $P_1$ 604 is selectively produced. At the portion where the A solution 101 and the B solution 102 are maintained in layers, the substance A 602 and the substance B 603 react at the interface between the A solution 101 and the B solution 102 to produce the objective substance $P_1$ 604 on the interface. An unreacted substance B remains after the production of the objective substance $P_1$ 604, and thus the substance B 603 further reacts with the objective substance $P_1$ 604 to produce the by-product $P_2$ 605 on the interface. Thus, the reaction mode is the same as in the reaction by the batch method, and the yield and the selectivity of the objective substance $P_1$ becomes lower as the complete mixing of the substance A 602 and the substance B 603 occurs in lesser portions. Particularly, the mixing of the substances by the batch method is controlled mainly by the convection developed by stirring, while the mixing of the substances according to the present invention is controlled mainly by the diffusion of the substances, and thus when the diffusion of the substances is extremely low, the yield and the selectivity of the objective substance $P_1$ is likely to be lower than in the reaction by the batch method.

On the other hand, as shown in FIG. 7(B), when the diffusion of the substances is sufficient at the high temperature, that is, when the diffusion time 702 is shorter than the "true" reaction time 701, the substance A 602 and the substance B 603 enter a state closer to the complete mixing during the reaction between the substance A 602 and the substance B 603 as compared with the case in FIG. 7(A). Thus, the substance A 602 and the substance B 603 can more efficiently react, and no unreacted substance B remains, and thus the objective substance $P_1$ 604 is more selectively produced. Specifically, when the reaction temperature is increased, the first stage reaction efficiently develops because the substance A 602 and the substance B 603 enter the state closer to the complete mixing to increase the increasing rate of the apparent reaction rate constant. The second stage reaction, however, does not significantly develop because the unreacted substance B hardly remains to reduce the increasing rate of the apparent reaction rate constant. Thus, when the reaction temperature is increased, the ratio $k_1/k_2$ between the apparent reaction rate constants is increased.

In FIG. 7(B), when the temperature is further increased to provide sufficient diffusion of the substances to reduce the diffusion time 702 closer and closer to zero, the "true" reaction time 701 becomes predominant, and the "true" reaction rate between the reactants becomes rate control, and thus the apparent reaction rate constant becomes close to a "true" reaction rate constant. Therefore, the equipment and the method according to the present invention can be used for obtaining the "true" reaction rate constant besides obtaining the objective substance $P_1$ at a high yield and a high selectivity.

The equipment and the method according to the present invention are particularly useful when the consecutive reaction between the substance A and the substance B is an exothermal reaction. In the exothermal reaction, exothermic heat by the reaction causes a hot spot, but the hot spot cannot be quickly eliminated by the reaction by the batch method because quick temperature control is difficult. Then, the reaction develops at a higher temperature than a predetermined reaction temperature, and if the second stage reaction only develops at the high temperature, the reaction is actually performed at a ratio $k_1/k_2$ between the apparent reaction rate constants lower than the ratio $k_1/k_2$ at the predetermined reaction temperature, leading to a reduction in the yield and the selectivity of the objective substance $P_1$. In the reaction by the equipment and the method according to the present invention, however, quick temperature control can be performed to quickly eliminate a hot spot. Thus, the reaction can be always developed at the predetermined reaction temperature, and the objective substance $P_1$ can be obtained at a high yield and a high selectivity according to the ratio $k_1/k_2$ between the apparent reaction rate constants at the predetermined reaction temperature.

The present invention also relates to a substance manufacturing system including the substance manufacturing equipment according to the present invention. The substance manufacturing system according to the present invention is, for example, a system in which the substance manufacturing equipments according to the present invention are connected in series. FIG. 8 is a conceptual view of the substance manufacturing system using the equipment and the method according to the present invention. The substance manufacturing system in FIG. 8 includes a mixing portion 105 for introducing an A solution 101 and a B solution 102, mixing the solutions via a microchannel 103, and discharging the solutions as a solution containing an objective substance 104, a mixing portion 803 for introducing a C solution 801 containing a substance C and the solution containing an objective substance 104, mixing the solutions via the microchannel 103, and discharging the solutions as a product solution 802 in a reaction between the substance C and the substance $P_1$, a purifying equipment 805 for purifying the product solution 802 in the reaction between the substance C and the substance $P_1$, and discharging the solution as a final objective substance 804, and a temperature control equipment 106.

The reaction between the substance C and the substance $P_1$ may be any type of reaction. The microchannel 103 in which the C solution 801 and the solution containing an objective substance 104 are mixed has a Y-shaped structure, but not limited to the Y-shaped structure, and may have a T-shaped structure or the like as long as the C solution 801 and the solution containing an objective substance 104 are mixed via the microchannel 103. Further, the channel may have a structure including nozzles for discharging the solution containing an objective substance 104 arranged in a wall surface of the channel through which the C solution 801 flows, or a structure including nozzles for discharging the solution containing an objective substance 104 arranged in a bottom surface of the channel through which the C solution 801 flows. The C solution 801 and the solution containing an objective substance 104 may be interchanged and mixed. The channel after the mixing of the C solution 801 and the solution containing an objective substance 104 has a linear structure, but not limited to the linear structure, and may have a meander structure or a spiral structure in consideration of a residence time.

Further, the mixing portion 803 in FIG. 8 includes the channel in which two kinds of solutions, the C solution 801 and the solution containing an objective substance 104 are mixed, but not limited to the channel in which the two kinds of solutions are mixed, and may include a channel in which three or more kinds of solutions are mixed or a multilayered channel. In addition to a mechanism for introducing the C solution 801 and the solution containing an objective substance 104, mixing the solutions via the microchannel 103, and discharging the solutions as the product solution 802 in the reaction between the substance C and the substance $P_1$, the mixing portion 803 may include, upstream or downstream of the mechanism, for example, a mechanism for introducing and mixing a plurality of solutions and discharging the solutions as the C solution 801, a mechanism for introducing and mixing the product solution 802 in the reaction between the substance C and the substance $P_1$ and one or more solution, causing a further reaction, and discharging a product solution of the reaction, or a mechanism for purifying the product by extraction or distillation.

As the mixing portion 803, a commercially available microreactor may be used such as a microreactor commercially available from Institut fur Mikrotechnik Mainz GmbH.

Further, the substance manufacturing system in FIG. 8 includes the mixing portion 105 and the mixing portion 803, but not limited to the two mixing portions, and may include the mixing portion 105 only or three or more mixing portions. Specifically, the substance manufacturing system according to the present invention may include at least one mixing portion according to the present invention including the microchannel, and the other mixing portion is not always a mixing portion in which a plurality of solutions are mixed in the microchannel, and may be a mixing portion (a reaction portion) used in the general batch method. The number of purifying equipments for purifying the objective substance is not limited to one, and a purifying equipment may be provided following each mixing portion, a purifying equipment may be provided following a specific mixing portion only, two kinds of purifying equipments may be provided following a specific mixing portion, or no purifying equipment may be provided. The purifying equipment may be a purifying equipment used in the general batch method.

In the present invention, the substance A and the substance B are the starting substances, but one or both of the A solution and the B solution may be a product solution taken out of a different substance manufacturing equipment. One or both of the A solution and the B solution may be an objective substance solution of a different reaction via a purifying equipment.

FIG. 9 is a schematic diagram of an embodiment of the substance manufacturing equipment according to the present invention. The substance manufacturing equipment in FIG. 9 includes a syringe 901, a pump 902, a tube 903 that connects the syringe 901 and the mixing portion 105, a thermostatic bath 904 for controlling the temperature of the mixing portion 105, a container 905 for recovering the solution containing an objective substance 104, and a tube 906 that connects the container 905 and the mixing portion 105.

The pump 902 may be, for example, a syringe pump and a syringe may be manually pushed as long as a solution in the syringe 901 can be introduced into the mixing portion 105. As means for introducing the solution into the mixing portion 105, the syringe 901 and the pump 902 are used, but a plunger pump, a diaphragm pump, or a screw pump may be used, or a water head difference may be used as long as the solution can be introduced into the mixing portion 105.

The tube 903 and the tube 906 may be changed according to the type of a reaction as long as they do not affect the reaction. For example, stainless , silicon, glass, hastelloy or silicone resin may be used, or glass lining, stainless or silicon having a surface coated with nickel or gold, or silicon having an oxidized surface, which have increased corrosion resistance, may be used.

Further, the thermostatic bath 904 corresponds to the temperature control equipment 106 in FIG. 1, and needs not to be a thermostatic bath as long as it can control the temperature of the mixing portion 105. The substance manufacturing equipment in FIG. 9 may include a mechanism for recovering solutions in the syringe 901, the tube 903, the mixing portion 105, and the tube 906 as waste liquids at the time of activation of the substance manufacturing equipment, the time of change of an experiment condition, the time of change of a reactant, or the time of cleaning of the substance manufacturing equipment. For example, three-way valve may be mounted in the middles of the tube 903 and the tube 906, and switched it when the solution in a predetermined amount flows, thereby switching to liquid feeding to a waste liquid recovery container or stopping the liquid feeding to the waste liquid recovery container.

Now, the present invention will be described in detail with an example, but the present invention is not limited by the example.

EXAMPLES

An H solution that is 0.8 mol/1 methylene chloride solution containing an aromatic compound H having substituents in first, third, and fifth positions of benzene ring (3,5-dimethylphenol (3,5-xylenol)), and an I solution that is 0.8 mol/l methylene chloride solution containing a halogenating agent I (bromine molecule $Br_2$) were mixed to react the substance H and the substance I. An objective substance is a monobrominated product produced in a first stage reaction between the substance H and the substance I, and a by-product is a dibrominated product produced in a second stage reaction. This reaction was performed by the batch method and the method of the present invention, and both reactions were compared.

The reaction by the batch method was performed by soaking a beaker containing the solution H in a thermostatic bath, and dropping the solution I into the beaker using a pipette while stirring the solution H using a stirrer.

The reaction by the present invention was performed in the substance manufacturing equipment in FIG. 9 using a microreactor (a channel width 40 $\mu$m, Nickel-on-copper) by Institut fur Mikrotechnik Mainz GmbH as the mixing portion 105 and a syringe pump IC3000 by kdScientific Inc. as the pump 902. The flow rate of a reaction solution was 3.35 ml/min, and the length of a tube that connects the container 905 and the mixing portion 105 was 1 m for ensuring a residence time. The tube 906 that connects the container 905 and the mixing portion 105 and the tube 903 that connects the syringe 901 and the mixing portion 105 are also placed in the thermostatic bath 904 as well as the mixing portion 105 to maintain the temperature of the reaction system at a constant temperature from the start to the finish of the reaction.

In the experiment by the batch method and the experiment by the substance manufacturing equipment according to the present invention, the reaction was performed at 0°C that is a reaction temperature in the general batch method. In the experiment by the batch method, the yield was 56% and the ratio $k_1/k_2$ between the apparent reaction rate constants was 1.9. In the experiment by the substance manufacturing equipment according to the present invention, the yield was 73% and $k_1/k_2$ was 6.5.

On the other hand, the reaction was performed by the same method at a reaction temperature of 20°C in consideration of the boiling point of the reaction system of 40°C. In the experiment by the substance manufacturing equipment according to the present invention, $k_1/k_2$ was 28 and the yield was 86% and high. In the experiment by the batch method, no change in the yield and $k_1/k_2$ was found as compared with the reaction at 0°C.

All publications, patents, and patent applications cited herein are incorporated herein by reference in their entirety.

**Claims**

1. A substance manufacturing equipment for reacting a substance A and a substance B that can perform a consecutive reaction to produce a product of a first stage reaction as an objective substance, comprising:

   a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is three times as the ratio at a melting point of the reaction system and a boiling point of the reaction system.

2. A substance manufacturing equipment for reacting a substance A and a substance B that can perform a consecutive reaction to produce a product of a first stage reaction as an objective substance, comprising:

   a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature at which a ratio $k_1/k_2$ between an apparent reaction rate constant $k_1$ of the first stage reaction and an apparent reaction rate constant $k_2$ of a second stage reaction between the substance A and the substance B is 10 and a boiling point of the reaction system.

3. A substance manufacturing equipment for reacting a substance A and a substance B that can perform a consecutive reaction to produce a product of a first stage reaction as an objective substance, comprising:

   a microchannel; a mixing portion including a channel for introducing a solution containing the substance A into the microchannel and a channel for introducing a solution containing the substance B into the microchannel; and a temperature control equipment for controlling a temperature of a reaction system in the microchannel, wherein the temperature control equipment controls the temperature of the reaction system in the microchannel within a temperature range between a temperature lower than a boiling point of the reaction system by 30°C and the boiling point of the reaction system.

4. The manufacturing equipment according to any one of claims 1 to 3 for reacting the substance A and the substance B that can perform a reaction in a mechanism below to produce a substance $P_1$ as an objective substance:

$$A + B \xrightarrow{k_1} P_1 + X$$

$$P_1 + B \xrightarrow{k_2} P_2 + Y$$

wherein A and B are the starting substances, $P_1$ is the objective substance, X, Y and $P_2$ are by-products, X and Y may optionally be produced, $k_1$ is the apparent reaction rate constant of the first stage reaction, and $k_2$ is the apparent reaction rate constant of the second stage reaction.

5. The manufacturing equipment according to claim 4, wherein an equivalent of the substance B introduced into the microchannel is equal to or smaller than an equivalent of the substance A introduced into the microchannel.

6. The manufacturing equipment according to any one of claims 1 to 6, wherein the temperature control equipment controls the temperature of the reaction system in the microchannel at a constant temperature from a start to a finish of the reaction between the substance A and the substance B.

[FIG. 1]

[FIG. 2]

$$A + B \xrightarrow{k_1} P_1 + X$$

$$P_1 + B \xrightarrow{k_2} P_2 + Y$$

[FIG. 3]

[FIG. 4]

[FIG. 5]

(a)

101

501

(b)

101

502

(c)

101

502

503 101

502

503 101

504 502

[FIG. 6]

(a)

(b)

[FIG. 9]

[FIG. 7]

(a)

(b)

[FIG. 8]

**European Patent Office**

**EUROPEAN SEARCH REPORT**

Application Number

EP 06 00 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/22857 A (BRITISH NUCLEAR FUELS PLC; HARSTON, PAUL; ATHERTON, MALCOLM, JOHN; HOL) 14 May 1999 (1999-05-14)<br>* abstract *<br>* page 1, line 12 - page 3, line 15 *<br>* page 3, line 20 - page 6, line 20 *<br>* page 7, line 11 - page 8, line 7; figures * | 1-6 | INV.<br>B01J19/00 |
| X | US 5 580 523 A (BARD ET AL)<br>3 December 1996 (1996-12-03)<br>* abstract *<br>* column 3, line 25 - line 59 *<br>* column 4, line 21 - line 64 *<br>* column 6, line 48 - column 7, line 20; claims; figures 4,5; example 1 * | 1-6 | |
| X | DE 103 21 472 A1 (FRAUNHOFER-GESELLSCHAFT ZUR FOERDERUNG DER ANGEWANDTEN FORSCHUNG E.V) 16 December 2004 (2004-12-16)<br>* abstract *<br>* paragraph [0011] - paragraph [0016] *<br>* paragraph [0023] - paragraph [0028] *<br>* paragraph [0044] - paragraph [0048] *<br>* paragraph [0053] - paragraph [0068] *<br>* claims; figures 1,3,4 * | 1-6 | |
| X | US 2002/143437 A1 (HANDIQUE KALYAN ET AL) 3 October 2002 (2002-10-03)<br>* abstract *<br>* paragraph [0052] - paragraph [0056] *<br>* paragraph [0065] - paragraph [0083]; claims; figure 1 * | 1-6 | TECHNICAL FIELDS SEARCHED (IPC)<br><br>B01J |

-/--

The present search report has been drawn up for all claims

| Place of search | Date of completion of the search | Examiner |
|---|---|---|
| Munich | 9 June 2006 | Nazario, L |

EPO FORM 1503 03.82 (P04C01)

**European Patent Office**

**EUROPEAN SEARCH REPORT**

Application Number

EP 06 00 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 232 786 A (COGNIS DEUTSCHLAND GMBH & CO. KG; COGNIS IP MANAGEMENT GMBH) 21 August 2002 (2002-08-21) * abstract * * paragraph [0009]; claims * ----- | 1-6 | |
| A | W. EHRFELD, V. HESSEL, H. LÖWE: "Microreactors - New Technology for Modern Chemistry" 2000, WILEY-VCH , XP002384564 * page 7, paragraph 1 - paragraph 4 * * page 9, paragraph 2 * * page 11, paragraph 1 - paragraph 2 * ----- | 1-6 | |

TECHNICAL FIELDS
SEARCHED (IPC)

The present search report has been drawn up for all claims

| Place of search | Date of completion of the search | Examiner |
|---|---|---|
| Munich | 9 June 2006 | Nazario, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 06 00 5338

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2006

| Patent document cited in search report | | Publication date | Patent family member(s) | | Publication date |
|---|---|---|---|---|---|
| WO 9922857 | A | 14-05-1999 | AU | 1163099 A | 24-05-1999 |
| | | | CA | 2304550 A1 | 14-05-1999 |
| | | | DE | 69830331 D1 | 30-06-2005 |
| | | | DE | 69830331 T2 | 02-02-2006 |
| | | | EP | 1028801 A1 | 23-08-2000 |
| | | | JP | 2001521816 T | 13-11-2001 |
| | | | US | 6747178 B1 | 08-06-2004 |
| | | | ZA | 9810107 A | 16-04-1999 |
| US 5580523 | A | 03-12-1996 | AT | 291227 T | 15-04-2005 |
| | | | AT | 221408 T | 15-08-2002 |
| | | | AU | 708281 B2 | 29-07-1999 |
| | | | AU | 2200195 A | 23-10-1995 |
| | | | CA | 2186896 A1 | 12-10-1995 |
| | | | DE | 69527613 D1 | 05-09-2002 |
| | | | DE | 69527613 T2 | 10-04-2003 |
| | | | DE | 69534086 D1 | 21-04-2005 |
| | | | DE | 69534086 T2 | 13-04-2006 |
| | | | EP | 0754084 A1 | 22-01-1997 |
| | | | JP | 3625477 B2 | 02-03-2005 |
| | | | JP | 10501167 T | 03-02-1998 |
| | | | WO | 9526796 A1 | 12-10-1995 |
| | | | US | 6828143 B1 | 07-12-2004 |
| DE 10321472 | A1 | 16-12-2004 | NONE | | |
| US 2002143437 | A1 | 03-10-2002 | EP | 1390145 A1 | 25-02-2004 |
| | | | JP | 2004536689 T | 09-12-2004 |
| | | | WO | 02078845 A1 | 10-10-2002 |
| | | | US | 2006036348 A1 | 16-02-2006 |
| EP 1232786 | A | 21-08-2002 | DE | 10106953 A1 | 05-09-2002 |
| | | | US | 2002192118 A1 | 19-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004099443 A
- JP 2001521816 A
- JP 2005073422 A

**Non-patent literature cited in the description**

- **HIDEHO OKAMOTO et al.** *Sumitomo Chemical,* 2001, vol. II, 32-45